# FASCICULE DE BREVET EUROPEEN

(11) **EP 1 016 347 B1**
(45) Date de publication et mention de la délivrance du brevet: **04.10.2001**
(21) Numéro de dépôt: 99403284.5
(22) Date de dépôt: 27.12.1999
(51) Int. Cl.: A23J 1/04, C09H 3/00

(54) **Procédé de préparation de gélatine de poisson**
Verfahren zur Herstellung von Fischgelatine
Process for preparing fish gelatine

(30) Priorité: 31.12.1998 FR 9816720
(43) Date de publication de la demande: 05.07.2000
(73) Titulaire: SKW BIOSYSTEMS, 92100 Boulogne-Billancourt (FR)
(72) Inventeur: Lefebvre, Gilbert, 16710 Saint Yrieix (FR); Biarrotte, Richard, 16000 Angouleme (FR); Takerkart, Georges, 92130 Issy-les-Moulineaux (FR); David, Jacky, 84800 Isle-sur-Sorgue (FR)
(74) Mandataire: Gillard, Marie-Louise

(56) Documents cités:
- US-A- 4 374 063
- US-A- 5 093 474
- US-A- 5 420 248
- US-A- 5 459 241
- US-A- 5 484 888
- GUDMUNDSSON M. AND H. HAFSTEINSSON: "Gelatin from cod skins as affected by chemical treatments" JOURNAL OF FOOD SCIENCE, vol. 62, no. 1, 1997, page 37-39,47 XP002117849

## Description

La gélatine est une protéine d'origine animale qui est connue depuis fort longtemps et a de nombreuses applications dans les domaines alimentaire, pharmaceutique, photographique et technique.

Elle est largement répandue dans les tissus et organes animaux tels que la peau et les os sous la forme de collagène qui en est le précurseur naturel.

La gélatine est industriellement obtenue à partir d'os et de peaux de bovins et de porcs qui sont collectés auprès des abattoirs.

Depuis plusieurs années, que ce soit aux Etats-Unis ou en Europe, la consommation de viandes bovines diminue, ce qui réduit progressivement la ressource en os et peaux de cette origine. Ce phénomène a été accentué ces dernières années par la crise de l'encéphalopathie spongiforme bovine et les mesures réglementaires consécutives.

En ce qui concerne les gélatines d'origine porcine, leur développement est limité par de nouveaux débouchés trouvés pour la matière première de départ - couennes alimentaires, snacks pour apéritifs par exemple - et par des considérations religieuses interdisant leur utilisation dans certains pays.

La recherche d'autres matières premières pouvant servir à la fabrication de la gélatine est donc particulièrement importante.

On sait depuis longtemps que la peau, les écailles et les arêtes de poisson renferment également du collagène qui s'apparente à celui trouvé chez les mammifères.

Le brevet GB 235,635 concerne la fabrication de colles, gélatines et farines de poisson à partir de sous-produits d'origine marine. Il s'agit principalement d'un traitement alcalin sur ces sous-produits suivi d'un traitement à l'acide sulfureux et lavage à l'eau pour éliminer les bases volatiles responsables de l'odeur de poisson. Ni les sous-produits utilisés, ni les conditions d'extraction, ni les caractéristiques des gélatines obtenues ne sont cependant décrits.

Depuis plusieurs années, l'industrie de la pêche et de la conserverie, pour répondre à la demande des consommateurs en produits frais et de qualité, notamment celle de filets de poissons, a développé la découpe des poissons dès leur capture ou à terre après décongélation desdits poissons. Il en résulte une certaine disponibilité en sous-produits de la pêche, peaux de poisson en particulier, que l'on peut envisager de transformer en gélatine.

Ceci a été notamment réalisé par la société NORLAND PRODUCTS qui produit depuis 1985 des solutions aqueuses de gélatine de poisson par extraction acide de peaux de cabillaud. Les gélatines correspondantes ne sont toutefois pas gélifiantes dans les conditions habituelles de mesure de la force en gel des gélatines ( solution de gélatine à 6.67% maintenue à 10°C pendant 17h selon la méthode Bloom décrite dans « The science and Technology of Gelatin », 1977, A.G. WARD and A. COURTS Eds., Academic press, p. 507) et restent liquides en solution même lorsque la concentration en gélatine s'élève jusqu'à 45%.

D'autres procédés ont été développés pour améliorer la qualité du produit obtenu à partir des peaux de poisson. Le procédé du brevet EP 0436266 comprend une étape de traitement par des bases diluées suivie d'étapes de lavage et de traitements par différents acides. En outre, l'extraction de la gélatine est faite à pH neutre, à une température comprise, de préférence, entre 40 et 50°C.

Plus récemment, le brevet US 5,484,888 a rapporté un procédé de préparation de gélatine à partir de peaux de poisson « casher », c'est-à-dire de poissons avec des écailles et des nageoires.

Les étapes du procédé décrit dans ce brevet se déroulent en milieu totalement alcalin, la première étape consistant en un trempage des peaux dans une solution alcaline pendant 3 à 60 jours. L'extraction se fait, elle aussi, à pH alcalin de préférence égal à 10, et à une température comprise entre 45 et 55°C. Enfin, dans ce brevet, les peaux de thon sont considérées comme impropres à la fabrication de gélatine en raison du prétraitement de cuisson auquel elles sont soumises.

L'invention concerne donc un procédé acide de préparation de gélatine de poisson gélifiante, de haute qualité, à partir de peaux de poisson crues fraîches ou décongelées, caractérisé en ce qu'il comprend les étapes de lavage à l'eau des peaux, de traitement acide et d'extraction à chaud à pH acide.

La matière première est constituée de peaux de poisson fraîches ou décongelées, obtenues en grande quantité, lors de la transformation du poisson en cru.

C'est le cas notamment pour le « thon au naturel », mais aussi pour d'autres poissons comme la sole, le tilapia, le poisson-chat, en particulier l'espèce d'eau douce *Ictalurus punctatus*, couramment dénommé « channel catfish », dont les filets crus sont commercialisés en grande quantité.

Selon un aspect préféré, les peaux de poissons proviennent de poissons avec des écailles et des nageoires tels que par exemple le thon, le tilapia, la carpe, la perche du Nil, le saumon, les soles, notamment les soles tropicales, le lieu, le merlus le maquereau ou d'autres poissons similaires.

Selon un autre aspect de l'invention, les peaux de poissons proviennent de poissons sans écailles tels que par exemple le poisson-chat, en particulier l'espèce d'eau douce *Ictalurus punctatus*, couramment dénommé « channel catfish », ou encore le machoiron ou le clarias.

Les filets de poisson obtenus après étêtage et éviscération sont dépecés et pelés mécaniquement ou manuellement, laissant les filets d'un côté et les peaux de l'autre. A ce stade, les peaux sont récupérées, lavées et peuvent être congelées immédiatement pour utilisation ultérieure.

Les peaux peuvent être utilisées telles quelles ou partiellement séchées pour avoir un extrait sec d'environ 65 % à 75 %, entières ou sous forme de morceaux, lesdits morceaux ayant par exemple une taille d'environ 10 à 30 cm, ou encore après broyage sous forme de broyat ayant une granulométrie comprise entre environ 5 mm et 15 mm.

Dans le procédé de l'invention, les peaux sont tout d'abord lavées à l'eau pour éliminer les composés indésirables, tels que par exemple le sang et les graisses.

Avantageusement, il a été trouvé que les peaux fraîches ou les peaux après décongélation étaient plus faciles à traiter et conduisaient à des gélatines ayant des propriétés améliorées si le lavage à l'eau est un lavage en milieu légèrement oxydant.

Celui-ci permet, en effet, une action sur la flore microbienne très abondante dans le mucus des peaux. Il empêche ainsi, ou tout au moins ralentit, les phénomènes de dégradation bactérienne générateurs de mauvaises odeurs, sans toutefois altérer la matière première.

Par "milieu légèrement oxydant", on entend une solution aqueuse d'un agent oxydant, l'agent oxydant étant présent à une concentration de l'ordre de 50 à 1000 ppm (0,005 à 0,1%).

Les agents oxydants pouvant être utilisés sont par exemple du type hypochlorite, en particulier l'hypochlorite de sodium ou de potassium, ou encore l'eau oxygénée.

Après ce lavage, les peaux sont immergées, sous agitation, dans un bain acide froid afin de provoquer leur gonflement, de favoriser l'élimination de composés indésirables et de préparer l'extraction de la gélatine.

Il a été trouvé qu'une combinaison judicieuse des paramètres réactionnels tels que la nature de l'acide, la quantité d'acide et le temps permettaient l'extraction de la gélatine avec un rendement satisfaisant et sans détérioration mécanique des peaux.

De préférence, on utilisera un acide minéral tel que, par exemple, l'acide chlorhydrique, l'acide sulfurique ou l'acide phosphorique, à raison de 3 à 20 l par tonne de peaux de poisson, ou encore un acide organique tel que, par exemple, l'acide acétique ou l'acide lactique dans les proportions ci-dessus.

Le traitement acide aura par exemple une durée de l'ordre de 1 8 h, de préférence d'environ 4h.

Le bain acide doit être ensuite suivi d'un lavage à l'eau pour éliminer l'excès d'acide et ajuster le pH à une valeur inférieure à environ 5.

Il a été également trouvé que, moyennant cette préparation, les peaux pouvaient être extraites dans des conditions thermiques non décrites jusqu'à présent, notamment à une température supérieure à 50°C, par exemple de l'ordre de 55°C à 70°C, sans perte importante de propriétés et notamment en conservant une force en gel élevée.

Selon l'invention, l'extraction est réalisée en milieu acide, à un pH inférieur à 5, de préférence de l'ordre de 2,5 à 4,5.

De préférence, l'extraction est arrêtée lorsque le titre en gélatine(c'est-à-dire la concentration dans le bouillon d'extraction) est de l'ordre de 4 à 5%, par exemple après 4 à 6 h.

Le milieu est alors séparé par décantation, conduisant à une solution de gélatine et un résidu solide.

De manière avantageuse, on a trouvé qu'il était possible de purifier les solutions de gélatine de poisson, et en particulier éliminer les traces de composés responsables de l'odeur et du goût de poisson, sans faire de traitement alcalin sur la matière première comme décrit dans la littérature.

Pour cela, la solution de gélatine après extraction est filtrée en présence d'un agent filtrant telles que les terres de diatomées, ladite filtration étant éventuellement réalisée sur un équipement de type filtres à plaques, qui permettent de retenir les traces de graisses et d'obtenir la limpidité souhaitée. La solution filtrée est ensuite passée sur des résines échangeuses d'ions pour réduire la charge ionique et fixer d'éventuels composés de dégradation des poissons, tels que les amines et dérivés aminés, puis on ajuste le pH à une valeur de l'ordre de 5 à 7. Enfin, la solution de gélatine filtrée et déminéralisée est soumise à une concentration sous vide poussé permettant d'éliminer les odeurs volatiles et d'améliorer encore l'odeur du produit.

De manière intéressante, il a enfin été trouvé que le résidu obtenu à l'issue de la décantation du bouillon d'extraction pouvait encore conduire à une petite quantité de gélatine de poisson non gélifiante, par addition d'eau et chauffage à une température d'environ 95°C pendant environ 2h.

Le procédé selon l'invention conduit ainsi principalement à une gélatine de poisson gélifiante de haute qualité, sans goût ni odeur de poisson. Il est applicable à toutes les peaux de poisson, dont seule la nature module la force en gel obtenue. Il peut aussi conduire de manière secondaire à une petite quantité de gélatine non gélifiante.

L'invention est illustrée de manière non limitative par les exemples ci-dessous.

### Exemple 1

4,5 kg de peaux de thon congelées sont mises à décongeler à température ambiante. Les peaux obtenues sont alors coupées pour avoir une dimension de l'ordre de 20 à 40 cm. Les peaux ainsi coupées sont mises à tremper sous agitation, pendant 20 minutes dans un premier bain de lavage avec 15 l d'eau rendue oxydante par l'ajout de 14 ml d'eau de Javel de densité 1,2. On égoutte et on rajoute alors 11,5 l d'eau propre et l'on agite encore pendant 15 mn ; après quoi ce deuxième bain est égoutté.

On effectue alors un bain acide par ajout de 6,7 1 d'eau, puis de 46 ml d'acide sulfurique concentré (96%). La durée de ce bain est de l'ordre de 5 h avec une agitation intermittente. A l'issue de ce bain, la solution acide est égouttée puis les peaux sont lavées par 3 x 15 I d'eau, chaque lavage durant environ 1 h,

Les peaux ainsi préparées sont introduites dans un réacteur dans lequel on rajoute 15 l d'eau chaude à 90°C. La solution dans le réacteur a un pH compris entre 3,5 et 4,0 et est maintenue à 58 - 60°C par circulation dans un échangeur thermique extérieur. Après 4 h d'extraction, le titre en gélatine est de l'ordre de 4%. On égoutte alors le bouillon d'extraction qui contient l'équivalent de 640 g de gélatine.

Le bouillon ainsi obtenu est centrifugé, puis filtré à l'aide d'une terre de diatomées sur un appareil type AMAFILTER.

La solution claire de gélatine de poisson est alors déminéralisée par passage sur résines échangeuses d'ions et le pH de la solution obtenue ajusté entre 5 et 7.

Cette solution est évaporée sous vide jusqu'à une concentration comprise entré 25 et 30%. La solution concentrée est ensuite gélifiée et séchée de la manière habituelle.

On obtient ainsi 605 g de gélatine de poisson sèche ayant une force en gel de 198 blooms et une viscosité de 3,8 mPa.s.

### Exemple 2

2 kg de peaux de tilapia sont décongelées comme dans l'exemple 1, puis lavées 2 fois à l'eau avant d'être traitées par un bain d'acide sulfurique à raison de 3 l d'eau contenant 8,5 ml d'acide sulfurique / kg de peaux pendant 4 h. Les peaux ainsi préparées sont lavées à l'eau, puis extraites comme dans l'exemple 1. On obtient ainsi 214 g de gélatine de poisson ayant une force en gel de 264 blooms et une viscosité de 2,1 mPa.s.

### Exemple 3

3 kg de peaux de poisson-chat (espèce *Ictalurus punctatus*) ou « channel catfish » sont décongelées et préparées comme dans l'exemple 1. On obtient 337 g de gélatine de poisson ayant une force en gel de 217 blooms et une viscosité de 1,7 mPa.s.

### Exemple 4

3 kg de peaux de maquereau sont décongelées et traitées comme dans l'exemple 1. On obtient 190 g de gélatine de poisson ayant une force en gel de 130 blooms et une viscosité de 3,5 mPa.s.

### Exemple 5

2,6 kg de peaux de thon congelé sont mis à décongeler à température ambiante. Les peaux obtenues sont alors coupées en morceaux ayant une dimension de l'ordre de 20 à 40 cm Les peaux ainsi coupées sont mises à tremper sous agitation, pendant 20 minutes, dans un premier bain de lavage avec 9 l d'eau rendue oxydante par l'ajout de 8,5 ml d'eau de javel de densité 1,2. On égoutte et l'on rajoute alors 7 l d'eau propre pour faire un deuxième bain, sous agitation pendant 15 minutes.

Après égouttage, on effectue alors un bain acide par ajout de 6 l d'eau, puis de 28 ml d'acide acétique glacial. La durée de ce bain est de l'ordre de 5 h avec une agitation intermittente. A l'issue de ce bain, la solution acide est égouttée puis les peaux sont lavées pendant 1 h avec 9 l d'eau.

Après égouttage, les peaux sont introduites dans un réacteur dans lequel on rajoute 8 l d'eau chaude à 90°C. La solution dans le réacteur a un pH compris entre 4,5 et 5 et est maintenue à 55°C pendant 4 h par circulation dans un échangeur thermique extérieur. Après 4 h, le titre en gélatine est de l'ordre de 3,8%.

On égoutte alors le bouillon et on procède aux opérations de centrifugation, filtration, déminéralisation, évaporation, gélification et séchage décrites dans l'exemple 1.

On obtient ainsi 323 g de gélatine de poisson sèche ayant une force en gel de 266 blooms et une viscosité de 3,9 mPa.s.

### Exemple 6

On procède comme dans l'exemple 5, mais en utilisant de l'acide lactique pour le bain acide à la place de l'acide acétique. On obtient ainsi 294 g de gélatine de force en gel de 260 blooms et de viscosité 3,8 mPa.s.

## Revendications

1. Procédé de préparation de gélatine de poisson gélifiante à partir de peaux de poisson crues fraîches ou décongelées, **caractérisé en ce qu'**il comprend les étapes de lavage à l'eau des peaux, de traitement acide et d'extraction à chaud à pH acide.

2. Procédé selon la revendication 1, **caractérisé en ce que** le lavage à l'eau est un lavage en milieu légèrement oxydant.

3. Procédé selon les revendications 1 ou 2, **caractérisé en ce que** les peaux de poissons sont utilisées telles quelles ou partiellement séchées, et soit entières, soit sous forme de morceaux, soit sous forme de broyat.

4. Procédé selon l'une quelconque des revendications 2 ou 3, **caractérisé en ce que** le milieu légèrement oxydant est constitué d'une solution aqueuse d'agent oxydant dans laquelle l'agent oxydant est présent à une concentration de l'ordre de 50 à 1000 ppm (0,005 à 0,1%).

5. Procédé selon la revendication 4, **caractérisé en ce que** l'agent oxydant est choisi parmi les hypochlorites, en particulier l'hypochlorite de sodium ou de potassium, ou l'eau oxygénée.

6. Procédé selon l'une des revendications 1 à 5 , **caractérisé en ce qu'**on utilise pour le traitement acide un acide minéral ou un acide organique.

7. Procédé selon la revendication 6, **caractérisé en ce qu'**on utilise comme acide minéral l'acide chlorhydrique, l'acide sulfurique ou l'acide phosphorique ou comme acide organique l'acide acétique ou l'acide lactique.

8. Procédé selon l'une quelconque des revendications 6 ou 7, **caractérisé en ce que** ledit acide est utilisé à raison de 3 à 20 l/tonne de peaux de poisson.

9. Procédé selon l'une quelconque des revendications 1 à 8, **caractérisé en ce que** le traitement acide est effectué pendant 1 à 8 h, de préférence 4 h.

10. Procédé selon l'une quelconque des revendications 1 à 9 **caractérisé en ce que** l'extraction est effectuée à un pH inférieur à 5, et de préférence entre 2,5 et 4,5.

11. Procédé selon l'une des revendications 1 à10, **caractérisé en ce que** l'extraction est effectuée à une température supérieure à 50°C, de préférence 55°C à 70°C.

12. Procédé selon l'une quelconque des revendications 1 à 11, **caractérisé en ce qu'**il comprend en outre des étapes de purification et de déminéralisation de la solution de gélatine résultant de l'extraction.

13. Procédé selon là revendication 12, **caractérisé en ce que** la solution de gélatine résultant de l'extraction est additionnée de terre de diatomées, puis filtrée.

14. Procédé selon les revendications 12 ou 13 **caractérisé en ce que** la solution de gélatine filtrée est soumise à une déminéralisation sur résines échangeuses d'ions suivie d'un ajustement à un pH de l'ordre de 5 à 7.

15. Procédé selon l'une quelconque des revendications 12 à 14, **caractérisé en ce que** la solution de gélatine filtrée et déminéralisée est ensuite concentrée sous vide pour éliminer les odeurs volatiles, puis figée et séchée.

16. Procédé selon l'une quelconque des revendications 1 à 15, **caractérisé en ce que** les peaux de poisson sont des peaux crues, provenant de poissons frais, lavées et immédiatement congelées après pelage.

17. Procédé selon la revendication 16, **caractérisé en ce que** les peaux proviennent de poisson avec des écailles et des nageoires.

18. Procédé selon la revendication 17, **caractérisé en ce que** ledit poisson est choisi parmi le thon, le tilapia, la perche du Nil, le saumon, les soles, en particulier les soles tropicales, la carpe, le lieu, le merlu et le maquereau.

19. Procédé selon la revendication 16, **caractérisé en ce que** les peaux proviennent de poissons sans écailles.

20. Procédé selon la revendication 19, **caractérisé en ce que** ledit poisson est choisi parmi le poisson-chat, en particulier l'espèce *Ictalurus punctatus*, le machoiron ou le clarias.

## Claims

1. Process for the preparation of gelling fish gelatin from fresh or defrosted raw fish skins, **characterised in that** it comprises steps involving washing of the skins with water, treatment with acid and hot extraction at acid pH.

2. Process according to claim 1, **characterised in that** the washing with water is carried out in a slightly oxidizing medium.

3. Process according to claim 1 or 2, **characterised in that** the fish skins are used as such or partially dried, and either whole, or in the form of pieces, or in the form of ground fragments.

4. Process according to any one of claims 2 or 3, **characterised in that** the slightly oxidizing medium consists of an aqueous solution of oxidizing agent in which the oxidizing agent is present at a concentration of the order of 50 to 1000 ppm (0.005 to 0.1%).

5. Process according to claim 4, **characterised in that** the oxidizing agent is selected from hypochlorites, particularly sodium or potassium hypochlorite, or hydrogen peroxide.

6. Process according to one of claims 1 to 5, **characterised in that** a mineral acid or an organic acid is used for the acid treatment.

7. Process according to claim 6, **characterised in that** hydrochloric acid, sulfuric acid or phosphoric acid is used as the mineral acid, or acetic acid or lactic acid is used as the organic acid.

8. Process according to any one of claims 6 or 7, **characterised in that** said acid is used at a rate of 3 to 20 l/tonne of fish skins.

9. Process according to any one of claims 1 to 8, **characterised in that** the acid treatment is carried out for 1 to 8 h, preferably 4 h.

10. Process according to any one of claims 1 to 9, **characterised in that** the extraction is carried out at a pH below 5 and preferably of between 2.5 and 4.5.

11. Process according to one of claims 1 to 10, **characterised in that** the extraction is carried out at a temperature above 50°C, preferably at 55°C to 70°C.

12. Process according to any one of claims 1 to 11, **characterised in that** it also comprises steps involving purification and demineralisation of the gelatin solution resulting from extraction.

13. Process according to claim 12, **characterised in that** the gelatin solution resulting from extraction is treated with diatomaceous earth and then filtered.

14. Process according to claim 12 or 13, **characterised in that** the filtered gelatin solution is subjected to demineralisation on ion exchange resins, followed by adjustment to a pH of the order of 5 to 7.

15. Process according to any one of claims 12 to 14, **characterised in that** the filtered and demineralised gelatin solution is subsequently concentrated under vacuum to remove the volatile odours and is then solidified and dried.

16. Process according to any one of claims 1 to 15, **characterised in that** the fish skins are raw skins originating from fresh fish, which are washed and immediately frozen after peeling.

17. Process according to claim 16, **characterised in that** the skins originate from fish with scales and fins.

18. Process according to claim 17, **characterised in that** said fish is selected from tuna, tilapia, Nile perch, salmon, sole, particularly tropical sole, carp, pollack, hake and mackerel.

19. Process according to claim 16, **characterised in that** the skins originate from fish without scales.

20. Process according to claim 19, **characterised in that** said fish is catfish, in particular the species *Ictalaurus punctatus*, African sea catfish or North African catfish.

## Patentansprüche

1. Verfahren zur Herstellung von Fischgelatine aus frischen oder aufgetauten rohen Fischhäuten, **dadurch gekennzeichnet, dass** es die Schritte des Waschens der Fischhäute mit Wasser, des Behandelns mit Säure und des Extrahierens in Wärme bei einem sauren pH-Wert umfasst.

2. Verfahren nach Anspruch 1, **dadurch gekennzeichnet, dass** das Waschen mit Wasser in einem leicht oxidierenden Medium erfolgt.

3. Verfahren nach Anspruch 1 oder 2, **dadurch gekennzeichnet, dass** die Fischhäute als solche oder teilweise getrocknet und entweder im Ganzen oder in Form von Stücken oder in gemahlener Form verwendet werden.

4. Verfahren nach Anspruch 2 oder 3, **dadurch gekennzeichnet, dass** das leicht oxidierende Medium aus einer wässrigen Lösung eines Oxidationsmittels besteht, in der das Oxidationsmittel in einer Konzentration von 50 bis 1000 ppm (0,005 bis 0,1 %) vorliegt.

5. Verfahren nach Anspruch 4, **dadurch gekennzeichnet, dass** das Oxidationsmittel ausgewählt ist aus Hypochloriten, insbesondere Natrium- oder Kaliumhypochlorit, oder Wasserstoffperoxid.

6. Verfahren nach einem der Ansprüche 1 bis 5, **dadurch gekennzeichnet, dass** für das Behandeln mit Säure eine mineralische Säure oder eine organische Säure verwendet wird.

7. Verfahren nach Anspruch 6, **dadurch gekennzeichnet, dass** als mineralische Säure Salzsäure, Schwefelsäure oder Phosphorsäure bzw. als organische Säure Essigsäure oder Milchsäure verwendet wird,

8. Verfahren nach Anspruch 6 oder 7, **dadurch gekennzeichnet, dass** die Säure in einer Menge von 3 bis 20 l/t Fischhäute verwendet wird.

9. Verfahren nach einem der Ansprüche 1 bis 8, **dadurch gekennzeichnet, dass** das Behandeln mit Säure über einen Zeitraum von 1 bis 8 Stunden, vorzugsweise 4 Stunden, erfolgt.

10. Verfahren nach einem der Ansprüche 1 bis 9, **dadurch gekennzeichnet, dass** das Extrahieren bei einem pH-Wert von unter 5, vorzugsweise zwischen 2,5 und 4,5, erfolgt.

11. Verfahren nach einem der Ansprüche 1 bis 10, **dadurch gekennzeichnet, dass** das Extrahieren bei einer Temperatur von über 50 °C, vorzugsweise 55 °C bis 70 °C, erfolgt.

12. Verfahren nach einem der Ansprüche 1 bis 11, **dadurch gekennzeichnet, dass** es weiters Schritte zum Reinigen und Entmineralisieren der aus der Extraktion resultierenden Gelatinelösung umfasst

13. Verfahren nach Anspruch 12, **dadurch gekennzeichnet, dass** die aus der Extraktion resultierende Gelatinelösung mit Diatomeenerde versetzt und dann filtriert wird.

14. Verfahren nach Anspruch 12 oder 13, **dadurch gekennzeichnet, dass** die filtrierte Gelatinelösung einer Entmineralisierung über Ionenaustauscherharze, gefolgt von einer Einstellung des pH-Werts auf einen Bereich von 5 bis 7 unterzogen wird.

15. Verfahren nach einem der Ansprüche 12 bis 14, **dadurch gekennzeichnet, dass** die filtrierte und entmineralisierte Gelatinelösung anschließend zum Entfernen von flüchtigen Gerüchen unter Vakuum einkonzentriert und dann fest werden und trocknen gelassen wird.

16. Verfahren nach einem der Ansprüche 1 bis 15, **dadurch gekennzeichnet, dass** die Fischhäute rohe Häute sind, die von frischen, gewaschenen und nach dem Abhäuten sofort tiefgefrorenen Fischen stammen.

17. Verfahren nach Anspruch 16, **dadurch gekennzeichnet, dass** die Häute von Fischen mit Schuppen und Flossen stammen.

18. Verfahren nach Anspruch 17, **dadurch gekennzeichnet, dass** die Fische ausgewählt sind aus Thunfisch, Tilapia sp., Nil-Barsch, Lachs, Seezungen, insbesondere tropischen Seezungen, Karpfen, Seelachs, Seehecht und Makrele.

19. Verfahren nach Anspruch 16, **dadurch gekennzeichnet, dass** die Häute von schuppenlosen Fischen stammen.

20. Verfahren nach Anspruch 19, **dadurch gekennzeichnet, dass** die Fische ausgewählt sind aus Katzenwels, insbesondere der Spezies Ictalurus punctatus, Chrysichthys nigrodigitatus oder Clarias sp.
